# EUROPÄISCHE PATENTANMELDUNG

(11) **EP 4 624 136 A1**
(43) Veröffentlichungstag der Anmeldung: **01.10.2025**
(21) Anmeldenummer: 25161894.8
(22) Anmeldetag: 05.03.2025
(51) Int. Cl.: B29C 64/153, B29B 9/00, B33Y 70/10, B33Y 10/00, C08K 3/00

(54) **POLYMERBASIERTES AUFBAUMATERIAL ZUM SELEKTIVEN SINTERN MIT HELLER FARBE**

(30) Priorität: 25.03.2024 DE 102024108442
(71) Anmelder: EOS GmbH Electro Optical Systems, 82152 Krailling (DE)
(72) Erfinder: PATERNOSTER, Stefan, Andechs (DE); CHIRIST, Marius, München (DE); FISCHER, Sybille, Eichenau (DE); GREG. Malin, München (DE); HIENDLMEIER, Lukas, Atting (DE)
(74) Vertreter: Meissner Bolte Partnerschaft mbB

(57) **Zusammenfassung**

Die Offenbarung betrifft Kunststoffpulver zur Verwendung als Aufbaumaterial zur additiven Herstellung eines dreidimensionalen Objekts durch Einwirken von NIR-Strahlung, wobei das Kunststoffpulver bestimmte Partikel eines hellen NIR-Strahlung absorbierenden Materials in einer Menge solchen enthält, dass eine als Pulverschüttung aus dem Kunststoffpulver gebildete Schicht einer Dicke von 2 mm einen Absorptionsgrad, bestimmt bei einer Wellenlänge von 980±7 nm, im Bereich von 20 bis 90 % aufweist. Mit Hilfe von additiver Fertigung mittels elektromagnetischer Strahlungsquellen mit einer Wellenlänge von 500 nm bis 1500 nm können sehr helle dreidimensionale Produkte in Pulverbettfertigung hergestellt werden, die sich durch gute mechanische Eigenschaften auszeichnen. Die vorliegende Offenbarung betrifft weiterhin Verfahren zur Herstellung solcher Kunststoffpulver, Verfahren und Systeme zur Herstellung von dreidimensionalen Objekten aus solchen Kunststoffpulvern, und dreidimensionale Objekte, die nach den beschrieben Verfahren hergestellt wurden.

## Beschreibung

Die Erfindung betrifft Kunststoffpulver zur Verwendung als Aufbaumaterial zur additiven Herstellung eines dreidimensionalen Objekts durch Einwirken von NIR-Strahlung, wobei das Kunststoffpulver bestimmte Partikel eines hellen NIR-Strahlung absorbierenden Materials in einer Menge enthält, die so eingestellt ist, dass bei der Verarbeitung das Kunststoffpulver geschmolzen und darunter vorliegendes verarbeitetes Kunststoffpulver angeschmolzen wird. Die vorliegende Erfindung betrifft weiterhin Verfahren zur Herstellung solcher Kunststoffpulver, Verfahren und Systeme zur Herstellung von dreidimensionalen Objekten aus solchen Kunststoffpulvern, und dreidimensionale Objekte, die nach den beschriebenen Verfahren hergestellt wurden.

### Stand der Technik

Verfahren zum schichtweisen Aufbau von dreidimensionalen Objekten mit Hilfe von Kunststoffpulvern, bei denen das Objekt schichtweise durch Ausbringen von Pulverschichten und Aufschmelzen/Verfestigen von Schichtbereichen mittels elektromagnetischer Strahlung, die nach der Herstellung das dreidimensionale Objekt bilden, sind beispielsweise aus der DE 44 10 046 bekannt. Ein solches Verfahren zur Herstellung von dreidimensionalen Objekten wird auch als "Additive Manufacturing" beziehungsweise "Additive Fertigung" bezeichnet.

Neben dem in der DE44 10 046 beschriebenen System gibt es viele Modifikationen von Verfahren und Vorrichtungen zur Herstellung von dreidimensionalen Objekten (Formkörpern) durch selektives Sintern mittels elektromagnetischer Strahlung, die alternativ verwendet werden können. Zum Beispiel könnten statt eines Lasers und/oder eines Lichtstrahls andere Systeme verwendet werden, um selektiv elektromagnetische Strahlung auf die Schicht aufzubringen, wie beispielsweise Masken-Belichtungssysteme oder dergleichen. Anstelle eines CO₂-Lasers können Laserdioden, die bspw. zellenförmig angeordnet sein können, verwendet werden.

Als Aufbaumaterial kommt meist ein Pulver mit Partikeln/Pulverteilchen zum Einsatz, die aus einem thermoplastischen Polymermaterial gebildet sind, und gegebenenfalls weitere Bestandteile wie Füllstoffe oder Metallpartikel enthalten können. Die mechanischen Eigenschaften des hergestellten Objekts können durch geeignete Wahl des Polymers im Rohmaterial beeinflusst werden. So werden Polymere, die zu bevorzugten mechanischen Materialeigenschaften im finalen Objekt führen, zum Beispiel in der DE 10 2008 024 281 A1 und DE 10 2008 024 288 A1 beschrieben. Ebenso wurde beschrieben, dass die mechanischen Eigenschaften durch Verwendung von Zusätzen wie Füllstoffen, Verstärkungsstoffen, Additiven, z.B. Pigmenten, weiter verbessert werden könnten. Beispielsweise könnten Kohlenstofffasern, Glasfasern, Aramidfasern, Carbon-Nanotubes, oder Zusätze, die ein geringes Aspektverhältnis (Glaskugeln, Aluminiumgries, etc.) oder mineralische Zusätze wie Titandioxid in das Polymer oder Copolymer-haltige Pulver einbezogen werden.

Ein möglicher Nachteil der bekannten nach dem oben beispielhaft beschriebenen Prinzip des "Additive Manufacturing" arbeitenden Sinterverfahren mittels CO₂-Laser stellt allerdings die mangelnde Flexibilität des Lasers dar. Um Kunststoffpulver oder mit Kunststoff ummantelte Partikel versintern zu können, wird üblicherweise ein CO₂-Laser verwendet, der eine Wellenlänge von 10600 nm aufweist. Hierbei muss ein aufwendiges Spiegelsystem verwendet werden, um den Laserstrahl über die Bauebene zu führen und der Laser muss permanent gekühlt werden. Eine Verwendung von Lichtwellenleitern ist mit CO₂-Lasern nicht möglich.

Ebenso wenig ist es möglich, ohne zusätzliche Maßnahmen auf preiswertere Laser mit einer Wellenlänge im Mittel- oder Nahinfrarotbereich, im Bereich des sichtbaren Lichts oder des Ultraviolettbereichs auszuweichen, da derartige Laser Kunststoffe ohne geeignete Zusätze nicht oder nur in unzureichendem Maße schmelzen können. Dieses Problem wurde in der deutschen Patentanmeldung DE 10 2004 012 683 A1 wenigstens teilweise durch die Zugabe von Absorbern zu polymerbasierten Pulvern gelöst. Die Absorber weisen ein Absorptionsspektrum auf, das Licht mit einer Wellenlänge im Mittel- oder Nahinfrarotbereich, im Bereich des sichtbaren Lichts oder des Ultraviolettbereichs absorbiert werden kann. Durch Belichtung der Absorber kann die sich im Absorber entwickelte Hitze zum Schmelzen der polymerbasierten Partikel genutzt werden. Es ist jedoch bekannt, dass als Trockenmischung (Dry Blend) eingemischte Additive in Laser-sinter-Pulver einen negativen Einfluss auf den Laser-Sinter-Prozess (Verkleinerung des Prozessfensters, schlechtere z-Anbindung der Schichten) haben können und somit zu schlechter Bauteilqualität führen können.

Nachteilig an der in der deutschen Patentanmeldung DE 10 2004 012 683 A1 vorgeschlagenen Lösung ist zudem, dass der Prozess zur Instabilität neigt, und der Prozess nur ein kleines Bau-/Temperaturfenster aufweist. Ein weiterer gravierender Nachteil ist, dass die so hergestellten Formkörper nur unzureichende mechanische Eigenschaften aufweisen.

Die WO 2020/099236 A1 schlägt zur Lösung der in DE 10 2004 012 683 A1 identifizierten Probleme die Verwendung von Ruß mit bestimmten Eigenschaften vor. Problemtisch hierbei ist allerdings, dass ein Zusatz von Ruß mit einer deutlich dunklen Verfärbung der hergestellten Objekte einhergeht, die nicht in allen Applikationen erwünscht ist. Dies betrifft medizinische Produkte, bei denen ein heller Farbeindruck mit Reinheit/Sauberkeit in Verbindung gebracht wird, aber auch Produkte, die in eine späteren Schritt gefärbt werden sollen, und bei denen eine dunkle Grundfarbe eine spätere Färbung erschweren würde.

Hierzu schlägt die DE 10 2004 012 683 A1 zwar auch einige Materialien als Absorber vor, die einen hellen Farbeindruck vermitteln, diese Materialien beruhen aber auf mit Metalloxiden beschichteten Glimmerpigmenten, die aufgrund ihrer Form mit den oben geschilderten Nachteilen verbunden sind.

Vor diesem Hintergrund bestand die Aufgabe der vorliegenden Erfindung darin, ein verbessertes Verfahren und/oder System zum Herstellen eines dreidimensionalen Objekts durch selektives Verfestigen des Aufbaumaterials an den dem Querschnitt des dreidimensionalen Objekts in der jeweiligen Schicht entsprechenden Stellen durch Einwirkung von NIR-Strahlung vorzuschlagen. Ebenso ist es eine Aufgabe der Erfindung ein Pulver für die Verwendung als Aufbaumaterial in einem derartig verbesserten Verfahren sowie einen durch das vorteilhafte Verfahren hergestellten Formkörper bereitzustellen.

### Beschreibung der Erfindung

In den dieser Erfindung zu Grunde liegenden Untersuchungen wurde überraschend festgestellt, dass der Einbezug von hellen NIR-Strahlung absorbierenden Materialien, die eine Partikelgröße von gleich oder weniger als 10 µm aufweisen, Kunststoffpulver mit guten Verarbeitungseigenschaften hergestellt werden können, die unter Verwendung von NIR-Strahlung über selektive Sinterprozesse zu hellen dreidimensionalen Produkten verarbeitet werden können. Der Anteil der NIR-Strahlung absorbierenden Materialien ist dabei so dimensioniert, dass bei dem Aufschmelzen des Kunststoffpulvers einer Schicht nicht nur diese Kunststoffpulver, sondern auch darunter befindlicher Kunststoff aus einer zuvor gebildeten Schicht teilweise aufgeschmolzen wird, um während des folgenden Abkühlens einen festen Verbund zwischen dem aufgeschmolzenen Kunststoffpulver und der darunter befindlichen Schicht bereitzustellen. Durch die vergleichsweise geringe Größe des NIR-Strahlung absorbierenden Materials wird zudem eine gute Mischbarkeit und homogene Verteilung des Materials in dem Kunststoffpulver sichergestellt und die bei der DE 10 2004 012 683 A1 beobachteten Probleme des negativen Einflusses auf den Laser-Sinter Prozess vermieden.

Demzufolge betrifft die vorliegende Erfindung in einem ersten Aspekt ein Kunststoffpulver zur Verwendung als Aufbaumittel zur additiven Herstellung eines dreidimensionalen Objekts durch Einwirken von NIR-Strahlung, wobei das Kunststoffpulver Partikel eines hellen NIR-Strahlung absorbierenden Materials mit einer mittleren Partikelgröße D50, wie bestimmt mittels Laserbeugung, von ≤ 10 µm in einer Menge enthält, dass eine als Pulverschüttung aus dem Kunststoffpulver gebildete Schicht einer Dicke von 2 mm einen Absorptionsgrad, bestimmt bei einer Wellenlänge von 980±7 nm, im Bereich von 20 bis 90 % aufweist.

NIR-Strahlung bezeichnet im hier beschrieben Kontext insbesondere elektromagnetische Strahlung mit einer Wellenlänge im Bereich von 500 nm bis 1500 nm.

Die Partikelgröße bezeichnet dabei die mittels Laserbeugung gemäß ISO 13320-1 bestimmte Partikelgröße. Als Gerät kann beispielsweise ein CILAS 1064 eingesetzt werden.

Die Angabe "hell" bezeichnet im Kontext der vorliegenden Erfindung Materialien, die in Pulverform eine Helligkeit (L) von mindestens 10 gemäß dem CIE-Lab L*a*b Farbmodell, wie spektralphotometrisch bestimmt gemäß DIN EN ISO 11664-4, aufweisen. Dadurch unterscheiden sich die erfindungsgemäß verwendeten die NIR-Strahlung absorbierenden Materialien von schwarzem Ruß, der eine Helligkeit (L) gemäß dem CIE-Lab L*a*b Farbmodell von 0 aufweist.

Die Mengenvorgabe "in einer Menge, dass eine als Pulverschüttung aus dem Kunststoffpulver gebildete Schicht einer Dicke von 2 mm einen Absorptionsgrad, bestimmt bei einer Wellenlänge von 980±7 nm, im Bereich von 20 bis 90 % aufweist" trägt dem Umstand Rechnung, dass die Absorption von NIR-Strahlung durch die absorbierenden Materialien materialabhängig ist, so dass sich ein Material bei Einstrahlung einer gegebenen Energiemenge stärker erhitzen kann als ein anderes Material. Durch Festlegung einer prozentualen Absorption des Materials wird solchen Unterschieden in der vorliegenden Anmeldung für die beanspruchten Kunststoffpulver Rechnung getragen.

Der vorgegebene Bereich ergibt sich dadurch, dass einerseits bei einer Absorption von mehr als 90 % (sehr viel Energie von dem Material im Oberflächenbereich aufgenommen wird, was eine lokale Überhitzung und damit einhergehend eine Zersetzung von Kunststoff begünstigen kann. In unteren Bereichen des Kunststoffs kommt hingegen nur noch wenig Energie an, was eine Schichtenanbindung beeinträchtigt. Ist auf der anderen Seite die Absorption zu gering (d.h. geringer als 20 %), wird zu wenig Energie in der zu verflüssigenden Pulverschicht absorbiert, was ein unvollständiges Aufschmelzen der Kunststoffpartikel zur Folge haben kann. Dies kann wiederum dazu führen, dass Gas nicht ausreichend aus dem Volumen zwischen den Partikeln verdrängt wird, was eineungünstige Schichtanbindung zur Folge hat.

Die Vorgabe "Partikelgröße D50, wie bestimmt mittels Laserbeugung, von ≤ 10 µm" schließt größere Partikel aus, die bei herzustellenden Schichtdicken in der Größenordnung 30 bis 60 µm nur geringfügig kleiner wären als die zu verfestigenden Kunststoffpartikel. Zudem wurde gefunden, dass sich mit kleineren Partikeln eine bessere homogene Verteilung der Partikel im Kunststoffpulver erreichen lässt, was ein Aufschmelzen unter Einsatz von weniger Energie für die Bestrahlung erlaubt und der Bildung von Hot-spots im Nahbereich um die NIR-Strahlung absorbierenden Partikel entgegenwirkt. Durch diese Maßnahmen kann insgesamt eine gute Verarbeitbarkeit des Kunststoffpulvers in einem Sinterverfahren erreicht werden.

Ein besonders günstiges Aufschmelz- und Schichtanbindungsverhalten kann mit Mengen des hellen NIR-Strahlung absorbierenden Materials erreicht werden, mit welchen die Absorption im mittleren bis oberen Bereich, wie oben angegeben, eingestellt wird. Demzufolge ist es bevorzugt, wenn die Menge des NIR-Strahlung absorbierenden Materials so eingestellt ist, dass eine als Pulverschüttung aus dem Kunststoffpulver gebildete Schicht einer Dicke von 2 mm einen Absorptionsgrad von mindestens 20% und/oder höchstens 50%, und bevorzugt von mindestens 25% und/oder höchstens 40% aufweist.

Die optimale absolute Menge des Absorbers des hellen NIR-Strahlung absorbierenden Materials ist, wie vorstehend angedeutet, von der Effektivität des Materials abhängig, die eingestrahlte Strahlung zu absorbieren und in Wärme umzuwandeln. Als grober Richtwert wird eine günstige Absorption dabei mit NIR-Strahlung absorbierenden Materialmengen im Bereich von mindestens 0,05 Gew.-% und/oder höchstens 5,0 Gew.-%, bezogen auf das Gesamtgewicht des Kunststoffpulvers erreicht. Als weiter bevorzugte Mengenanteile können Anteile von mindestens 0,08 Gew.-% und/oder höchstens 2,0 Gew.-% und noch weiter bevorzugt mindestens 0,1 Gew.-% und/oder höchstens 1,2 Gew.-% angegeben werden. Ein erfindungsgemäßes Kunststoffpulver liegt in einer Ausführungsform auch dann vor, wenn das Kunststoffpulver die hier vorgegebene Menge an NIR-Strahlung absorbierenden Material enthält, aber die Menge einen Absorptionsgrad in einer auf dem Kunststoffpulver als Pulverschüttung gebildeten Schicht mit einer Dicke von 2 mm außerhalb des Bereichs von 20 bis 90 % vermittelt.

Wie vorstehend erwähnt, kann insbesondere durch eine kleine Partikelgröße des hellen NIR-Strahlung absorbierenden Material eine geeignet homogene Verteilung des Materials in dem Kunststoffpulver erreicht werden, was auch den Einsatz geringerer Anteile des Materials ermöglicht. Bevorzugt ist es demzufolge, wenn das helle NIR-Strahlung absorbierende Material eine Partikelgröße von weniger als 5 µm, weiter bevorzugt weniger als 2 µm und noch weiter bevorzugt von 1 µm oder weniger aufweist. Nach unten ist die Partikelgröße durch die technisch erreichbare und wirtschaftlich sinnvolle minimale Partikelgröße beschränkt, wobei aus Gründen der Verfügbarkeit eine minimale Partikelgröße von mindestens etwa 20 nm und bevorzugt mindestens etwa 100 nm als besonders geeignet angegeben werden kann. Helle NIR-Strahlung absorbierende Materialien mit einer Partikelgröße in diesem Bereich sind z.B. LaB₆ (mit einer Primärpartikelgröße < 100 nm und einer Aggregatpartikelgröße von > 500 nm), Metalloxid (TiO₂/(Sn/Sb)O₂) Pigmente mit einer Primärpartikelgröße <1µ m oder Fabulase ^{®} 322 (Kupferhydroxidphosphat) mit einer mittleren Partikelgröße D50 von etwa 3,5 µm oder etwa 0,6 µm. Die jeweiligen Partikelgrößen sind im Kontext der hier beschriebenen Erfindung mittels Laserbeugung zu bestimmen und bezeichnen die D50 Partikelgröße.

Für das erfindungsgemäße Kunststoffpulver ist es weiterhin von Vorteil, wenn die hellen NIR-Strahlung absorbierenden Materialpartikel ein niedriges Aspektverhältnis aufweisen, so dass die Partikel nicht deutlich länger als breit sind, und in der Regel nicht als Plättchen oder Stäbchen vorliegen. Für eine Plättchenform hat sich gezeigt, dass eine homogene Verteilung der Materialpartikel schwieriger zu realisieren ist, da die Plättchen aufgrund der verschiedenen Polarität im Vergleich zu den Kunststoffpartikeln aneinander haften bleiben können. Da dieser Effekt bei Partikeln mit einem geringeren Aspektverhältnis weniger ausgeprägt ist, ist es bevorzugt, wenn die Partikel des hellen NIR-Strahlung absorbierenden Materials ein Aspektverhältnis von weniger als 10, bevorzugt weniger als 5, weiter bevorzugt weniger als 3 und noch weiter bevorzugt weniger als zwei aufweisen. Das Aspektverhältnis bezeichnet dabei den Quotienten aus dem Mittelwert der größten Ausdehnung der Partikel/ Mittelwert der kleinsten Ausdehnung der Partikel und kann mittels mikroskopischer Methoden bestimmt werden.

Wie vorstehend erwähnt weist das helle NIR-Strahlung absorbierende Material eine Farbe auf, die sich deutlich von Ruß absetzt. In einer bevorzugten Ausführungsform weist das helle NIR-Strahlung absorbierende Material eine Helligkeit bestimmt gemäß dem CIE-Lab Farbmodell, wie spektralphotometrisch gemessen (gemäß DIN EN ISO 11664-4), von 25 oder mehr und bevorzugt von 50 oder mehr auf. Alternativ oder zusätzlich ist es bevorzugt, wenn das helle NIR-Strahlung absorbierende Material ein anorganisches Pigment, z.B. auf Basis von Kupferhydroxidphosphat, Metalloxiden oder LaB₆, umfasst oder ist.

Um eine Verarbeitung des Kunststoffpulver in einem Verfahren zur Herstellung von dreidimensionalen Objekten, bei der das Pulver aus einem Vorratsbehältnis als Schicht in einem Bauraum ausgebracht wird, zu ermöglichen, ist es von Vorteil, wenn das Kunststoffpulver eine Rieselfähigkeit, bestimmt gemäß DIN EN ISO 6186, aufweist, die um nicht mehr als 20% von der Rieselfähigkeit des Kunststoffpulvers ohne die Partikel eines hellen NIR-Strahlung absorbierenden Materials abweicht (mit anderen Worten sollte sich die Fließfähigkeit des Kunststoffpulvers durch der Zusatz des hellen NIR-Strahlung absorbierenden Materials nicht in relevantem Umfang verändern). Besonders bevorzugt ist es, wenn das Kunststoffpulver eine Rieselfähigkeit aufweist, die um nicht mehr als 10% und insbesondere bevorzugt nicht mehr als 5% von der Rieselfähigkeit des Kunststoffpulvers ohne die Partikel eines hellen NIR-Strahlung absorbierenden Materials abweicht.

Die Art und Weise, wie das helle NIR-Strahlung absorbierende Material in das erfindungsgemäße Kunststoffpulver einbezogen ist, unterliegt keinen relevanten Beschränkungen, solange das helle NIR-Strahlung absorbierende Material in dem Kunststoffpulver einigermaßen homogen verteilt ist. Dies kann in Einzelfällen auch durch eine Mischung von Partikeln, die das helle NIR-Strahlung absorbierende Material enthalten, und Partikeln, die dieses Material nicht enthalten, gewährleistet sein. In einer Ausführungsform beruht das Kunststoffpulver auf einer Trockenpulvermischung, die Kunststoffpartikel und Partikel des hellen NIR-Strahlung absorbierenden Materials umfasst. In einer anderen Ausführungsform enthält das Kunststoffpulver die hellen NIR-Strahlung absorbierenden Materialpartikel in auf der Oberfläche von Kunststoffpartikeln adsorbierter Form. In einer noch weiteren Ausführungsform sind die Partikel des hellen NIR-Strahlung absorbierenden Materials in größere Kunststoffpartikel inkorporierte Partikel, z.B. in dem der Kunststoff der Kunststoffpartikel mit dem hellen NIR-Strahlung absorbierenden Material compoundiert und zu einem Kunststoffpulver verarbeitet wird, oder indem eine Beschichtung des hellen NIR-Strahlung absorbierenden Materials und Kunststoff auf ausschließlich auf Kunststoff beruhende Primärpartikel aufgebracht wird.

Bei dem Kunststoff, der die Basis des erfindungsgemäßen Kunststoffpulvers bildet, kann es sich grundsätzlich um jeden thermoplastischen Kunststoff handeln, der mittels pulverbasierter Verarbeitungsverfahren zu dreidimensionalen Objekten verarbeitet werden kann.

Geeignete thermoplastische Kunststoffe können aus der aus Homopolymeren, Copolymeren und Polyblends (auch bekannt als Polymer-Blends) bestehenden Gruppe ausgewählt werden. Unter einem Polyblend (auch als "Polymerblend" bezeichnet) wird eine Mischung aus zwei oder mehreren unterschiedlichen Polymeren verstanden. Bei einem Polyblend kann es sich um ein einphasiges Polyblend (homogenes Polyblend) oder mehrphasiges Polyblend (heterogenes Polyblend) handeln. Bei einem mehrphasigen Polyblend werden mittels dynamischer Differenzkalorimetrie typischerweise mehrere Glasübergänge beobachtet.

Ferner können bei einem mehrphasigen Polyblend mittels dynamischer Differenzkalorimetrie mehrere Schmelzpeaks entsprechend den Schmelzpunkten der einzelnen Phasen beobachtet werden.

Das Polymer kann aus Polyaryletherketon (PAEK), Polyarylethersulfon (PAES), Polyamiden, Polyestern, Polyethern, Polylactiden (PLA), Polyolefinen, Polystyrolen, Polyphenylensulfiden, Polyvinylidenfluoriden, Polyphenylenoxiden, Polyimiden, Polyetherimiden, Polycarbonaten, und Copolymeren, die mindestens eines der vorangehenden Polymere bzw. deren Monomereinheiten einschließen, sowie Polymerblends einer oder mehrerer der genannten Polymere oder Copolymere davon, ausgewählt werden, wobei die Auswahl jedoch nicht auf die oben genannten Polymere sowie Copolymere und Polymer-blends davon beschränkt ist. Der Begriff "Polymere" kann auch Oligomere mit zyklischer oder ringförmiger molekularer Struktur umfassen. Ein Beispiel für ein derartiges Oligomer stellt CBT (cyclic butylen terephtalate) zur Herstellung von PBT (Polybutylenterephtalat) dar.

Geeignete PAEK-Polymere und -Copolymere werden beispielsweise aus der aus Polyetheretherketon (PEEK), Polyetherketonketon (PEKK), Polyetherketon (PEK), Polyetheretherketonketon (PEEKK), Polyetherketonetherketonketon (PEKEKK), Polyaryletheretheretherketon (PEEEK) und Copolymeren, die mindestens eines der vorgenannten Polymere einschließen, bestehenden Gruppe ausgewählt.

Geeignete Polyamid-Polymere oder -Copolymere können aus der Gruppe ausgewählt werden, die aus Polamid 6/6T, Polyamidelastomeren wie Polyetherblockamide wie z.B. PEBAX^{™}-basierte Materialien, Polyamid 6, Polyamid 66, Polyamid 11, Polyamid 12, Polyamid 612, Polyamid 610, Polyamid 1010, Polyamid 1012, Polyamid 1212, Polyamid PA6T/66, PA4T/46 und Copolymeren, die mindestens eines der vorgenannten Polymere einschließen besteht.

Geeignete Polyesterpolymere oder Copolymere können aus Polyalkyl-enterephthalaten (z.B. PET, PBT) und deren Copolymeren ausgewählt werden. Geeignete Polyolefinpolymere oder -Copolymere können aus der aus Polyethylen und Polypropylen bestehenden Gruppe ausgewählt werden. Geeignete Polystyrolpolymere oder Copolymere können aus der aus syndiotaktischen und isotaktischen Polystyrolen bestehenden Gruppe ausgewählt werden. Geeignete Polyimidpolymere oder -Copolymere können aus der aus Polyarylamid, Polybismaleinimid und insbesondere Polyetherimid (PEI) bestehenden Gruppe ausgewählt werden.

Im Rahmen der Erfindung sind Polyamid-Polymere oder -Copolymere sowie Polyaryletherketone (PAEK) bevorzugt, insbesondere Polyamid 12, Polyamid 11 und/oder Polyamid 1012 und/oder ein Copolymer, das mindestens eines der vorangehenden Polymere bzw. deren Monomereinheiten einschließt, und/oder zumindest einem Polymerblend, das zumindest eines der genannten Polymere oder Copolymere umfasst. Eine weiteres bevorzugtes Polymer ist oder umfasst Polyetheretherketon (PEKK).

In einer Ausführungsform der Erfindung umfassen die polymerbasierten Partikel als Polymermaterial Polymere oder Copolymere oder Blends von PAEK, Polyamid, Polypropylen oder Polyetherimid, wobei das PAEK bevorzugt PEEK, PEKK, PEK, PEEKK, PEKEKK und/oder PEEEK ist und das bevorzugte Polyamid Polyamid 12 und/oder Polyamid 11 ist. Ferner genügen die aus diesen Polymermaterialien gefertigten Formkörper den hohen Anforderungen, die bezüglich der mechanischen Beanspruchung gestellt werden.

Die vorliegende Erfindung eignet sich, wie erwähnt, auch für den Einsatz von Polyblends.

Neben dem thermoplastischen Kunststoff, bzw. Polymer kann das erfindungsgemäße Kunststoffpulver weitere übliche Zusatzstoffe enthalten, wie nicht zuletzt die bereits im Vorstehenden erwähnten Füllstoffe und Metallpartikel.

Solche optionalen Zusatzstoffe sind z.B. Reflexionspartikel, z.B. das als Weißpigment bekannte Titandioxid. Durch die Verwendung von Titandioxid können Bauteile mit einer (im Vergleich zu Bauteilen ohne Titandioxid) homogeneren Farbe erhalten werden. Vorzugsweise liegt der Gewichtsanteil der Reflexionspartikel am Gesamtgewicht des Kunststoffpulvers zwischen 0,1 % und 15,0 %, bevorzugt bei mindestens 0,3 % und/oder höchstens 5 %, insbesondere bei mindestens 0,5 % und/oder höchstens 1 %, wobei die Mengenangaben auf das Gesamtgewicht des Pulvers bezogen sind.

Verwendbare Füllstoffe und/oder Verstärkungsfasern sind z.B. Glas, z.B. in Form von Glaskugeln oder Glasfasern, Aramidfasern, Silizium, Aluminium oder Kohlenstofffasern. Enthalten die erfindungsgemäßen Kunststoffpulver Füllstoffe und/oder Verstärkungsfasern, so ist es bevorzugt, wenn der Anteil des thermoplastischen Kunststoffs zu mindestens 20 Gew.-%, weiter bevorzugt zu mindestens 40 Gew.-%, und noch weiter bevorzugt mindestens Gew.-60 %, bezogen auf die Gesamtmasse des Kunststoffpulvers ausmacht. In einer Ausführungsform enthält das erfindungsgemäße Kunststoffpulver keine Füllstoffe und/oder Verstärkungsfasern.

Zudem können dem erfindungsgemäßen Kunststoffpulver Additive zur Verbesserung der Verarbeitungseigenschaften zugesetzt sein, z.B. Mittel zur Modifikation der Rieselfähigkeit oder antistatische Mittel. Ein als Rieselhilfe geeignetes Additiv ist z.B. pyrogene Kieselsäure. Der Anteil der Rieselhilfe kann meist sehr gering ausfallen, d.h. in den meisten Fällen ist es ausreichend, wenn die Rieselhilfe in einer Menge von weniger als 0,5 Gew.-% und insbesondere weniger als 0,1 Gew.-% in das Kunststoffpulver einbezogen wird.

In einem weiteren Aspekt betrifft die vorliegende Erfindung Verfahren zur Herstellung eines Kunststoffpulvers, wie es im vorstehenden beschrieben wurde, wobei das Verfahren die Schritte
(i) Bereitstellen von Kunststoffpartikeln und Partikeln des NIR-Strahlung absorbierenden Materials und
(ii) Vermischen der Kunststoffpartikel und der Partikel des NIR-Strahlung absorbierenden Materials umfasst oder Aufbringen der Partikel des NIR-Strahlung absorbierenden Materials auf die Kunststoffpartikel oder Inkorporieren der Partikel des NIR-Strahlung absorbierenden Materials in die Kunststoffpartikel umfasst.

Wenn das erfindungsgemäße Kunststoffpulver nur durch Vermischen der Kunststoffpartikel und der Partikel des NIR-Strahlung absorbierenden Materials erzeugt wird, weisen die Partikel zweckmäßig bereits die Größe auf, die die Partikel in dem fertigen Kunststoffpulver aufweisen sollen. In diesem Fall kann das Vermischen zweckmäßig ohne Zusatz von Lösungsmittel erfolgen, um eine Trockenmischung ("dry-blend") zu erzeugen.

Alternativ können die Partikel des NIR-Strahlung absorbierenden Materials auf die Kunststoffpartikel aufgebracht werden, z.B. in den eine Dispersion der Partikel des NIR-Strahlung absorbierenden Materials in einem Lösungsmittel auf die Kunststoffpartikel aufgesprüht und das Lösungsmittel dann verdampft wird, oder in dem eine gemischte Dispersion aus Partikeln des NIR-Strahlung absorbierenden Materials, Kunststoffpartikeln und Lösungsmittel hergestellt und das Lösungsmittel anschließend verdampft wird. Ein Inkorporieren kann z.B. dadurch erfolgen, dass größere Kunststoffpartikel, z.B. ein konventionelles Granulat, in einem Extruder mit Partikeln des NIR-Strahlung absorbierenden Materials compoundiert und zu kleineren Partikeln verarbeitet werden, z.B. durch Erzeugung von Spinnfasern und anschließendes Zerschneiden in Partikel oder durch kryogenes Vermahlen und ggf. nachträgliches Verrunden der Partikel mit einem geeigneten Verfahren.

In einem noch weiteren Aspekt betrifft die vorliegende Erfindung ein Verfahren zur Herstellung eines dreidimensionalen Objekts durch selektives Verfestigen eines pulverförmigen Aufbaumaterials an den dem Querschnitt des dreidimensionalen Objekts in der jeweiligen Schicht entsprechenden Stellen durch Einwirkung von Strahlung, vorzugsweise von NIR-Strahlung, wobei als Aufbaumaterial ein Kunststoffpulver, wie es vorstehend beschrieben wurde, verwendet wird und wobei das Aufbaumaterial durch Einwirkung von elektromagnetischer Strahlung, die durch eine Strahlungsquelle emittiert wird, selektiv verfestigt wird.

Die Verfestigung kann insbesondere durch Einwirkung von elektromagnetischer Strahlung in einer im NIR gelegenen Wellenlänge oder Wellenlängenbereich auf das Kunststoffpulver erfolgen, bei dem dieses zumindest teilweise an- oder aufgeschmolzen und anschließend abgekühlt wird, wobei sich ein fester Verbund bildet. Eine geeignete im NIR gelegenen Wellenlänge oder Wellenlängenbereich liegt im Bereich von 500 bis 1500 nm und insbesondere bei 980±7 nm und/oder 940±7 nm und/oder 810±7 nm und/oder 640±7 nm und/oder 1064±7 nm.

Die Menge der eingestrahlten Energie, die auf eine Stelle im Querschnitt des zu erzeugenden dreidimensionalen Objekts aufgebracht wird um diese zu verfestigen, ist vorzugsweise im Bereich 0,02 J/mm³ bis 2,5 J/mm³, weiter bevorzugt mindestens 0,05 J/mm³ und/oder höchstens 1,0 J/mm³, einzustellen.

Zudem ist es günstig, wenn das Kunststoffpulver vor dem Verfestigen auf eine Temperatur von höchstens 15°C, bevorzugt höchstens 10°C und weiter bevorzugt höchstens 5°C unterhalb der Schmelztemperatur des Kunststoffpulvers erhitzt wird, da dadurch die einzustrahlende Energiemenge gering gehalten und das Risiko für Hotspots durch inhomogen in dem Kunststoffpulver verteilte Partikel des NIR-Strahlung absorbierenden Materials reduziert wird.

Um das Verfahren wirtschaftlicher und/oder umweltverträglicher zu gestalten, kann ein Teil des in einem vorangegangenen Herstellungszyklus übriggebliebenen, unverfestigten Aufbaumaterials ("Gebrauchtpulver") in einem nachfolgenden Zyklus wiederverwendet werden. Dazu wird das Gebrauchtpulver mit Neupulver in einem vorbestimmten Verhältnis miteinander gemischt. In einer bevorzugten Ausführungsform weist das Aufbaumaterial also einen Anteil Gebrauchtpulver, welches zuvor beim Herstellen eines Formkörpers als unverfestigtes Aufbaumaterial übriggeblieben ist, und einen Anteil Neupulver, das zuvor noch nicht beim Herstellen eines Objekts verwendet worden ist, auf. Vorzugsweise beträgt der Anteil an Neupulver höchstens 70 Gewichtsprozent, insbesondere höchstens 60, 50 oder gar 40 Gewichtsprozent.

Ein weiterer Aspekt der vorliegenden Erfindung betrifft ein dreidimensionales Objekt, das nach dem vorstehend beschriebenen Verfahren herstellbar oder hergestellt oder durch selektives Verfestigen eines pulverförmigen Aufbaumaterials an den dem Querschnitt des dreidimensionalen Objekts in der jeweiligen Schicht entsprechenden Stellen durch Einwirkung von Strahlung hergestellt ist, insbesondere durch Einwirkung von NIR-Strahlung, wobei als Aufbaumaterial ein Kunststoffpulver gemäß dem vorstehend beschriebenen ersten Aspekt verwendet wurde. Ein derart hergestelltes Objekt zeichnet sich durch eine verbesserte Schichtanbindung aus, die sich insbesondere in verbesserten mechanischen Eigenschaften orthogonal zur Schichtenfolge im Objekt zeigt.

Ein noch weiterer Aspekt der vorliegenden Erfindung stellt ein System dar, welches zur Herstellung von dreidimensionalen Objekten durch selektives Verfestigen des erfindungsgemäßen pulverförmigen Aufbaumaterials an den dem Querschnitt des dreidimensionalen Objekts in der jeweiligen Schicht entsprechenden Stellen durch Einwirkung von Strahlung, bevorzugt von NIR-Strahlung dient. Erfindungsgemäß weist das System mindestens eine Strahlungsquelle, die ausgebildet ist um elektromagnetische Strahlung, insbesondere spezifisch in einer im NIR gelegenen Wellenlänge oder Wellenlängenbereich, zu emittieren, eine Prozesskammer, die als offener Behälter mit einer Behälterwandung ausgeführt ist, einen in der Prozesskammer befindlichen Träger, wobei Prozesskammer und Träger gegeneinander in vertikaler Richtung beweglich sind, einen Vorratsbehälter und einen in horizontaler Richtung bewegbaren Beschichter auf. Der Vorratsbehälter ist zumindest teilweise mit dem erfindungsgemäßen Kunststoffpulver als Aufbaumaterial befüllt.

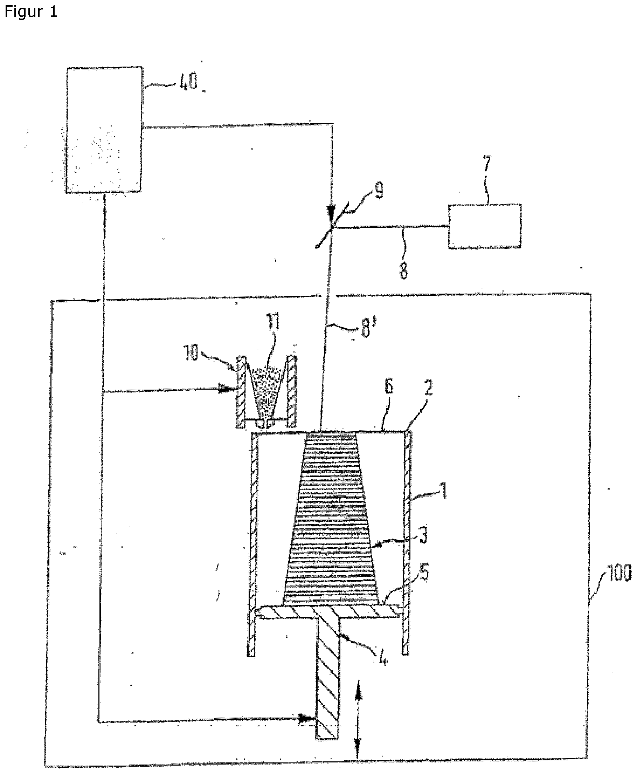

Ein solches System ist in Figur 1 beispielhaft beschrieben:
Figur 1 zeigt schematisch eine Lasersintervorrichtung mit einem Laserstrahl und einem Ablenkspiegel, wie sie bei Verwendung eines CCL-Lasers üblich ist, mit der ein Verfahren zur schichtweisen Herstellung eines dreidimensionalen Objekts durchgeführt werden kann. Diese Vorrichtung weist einen Behälter 1 auf, der nach oben offen ist und nach unten durch einen Träger 4 zum Tragen eines zu bildenden Objektes 3 begrenzt wird. Durch den oberen Rand 2 des Behälters (bzw. seiner Seitenwände) wird eine Arbeitsebene 6 definiert. Das Objekt befindet sich auf der Oberseite des Trägers 4 und wird aus einer Mehrzahl sich parallel zu der Oberseite des Trägers 4 erstreckender Schichten aus einem mittels elektromagnetischer Strahlung verfestigbaren, pulverförmigen Aufbaumaterial gebildet. In der hier beschriebenen Erfindung ist das verfestigbare, pulverförmige Aufbaumaterial das erfindungsgemäße Kunststoffpulver. Der Träger ist über eine Höheneinstellvorrichtung in vertikaler Richtung, d.h. parallel zu der Seitenwand des Behälters 1 verschiebbar. Damit kann die Position des Trägers 4 relativ zur Arbeitsebene 6 eingestellt werden.

Oberhalb des Behälters 1 bzw. der Arbeitsebene 6 ist eine Aufbringvorrichtung 10 zum Aufbringen des zu verfestigenden Pulvermaterials 11 auf die Trägeroberfläche 5 oder eine zuletzt verfestigte Schicht vorgesehen. Weiterhin ist oberhalb der Arbeitsebene 6 eine Bestrahlungseinrichtung in Form eines Lasers 7 angeordnet, die einen gerichteten Lichtstrahl 8 abgibt. Dieser wird über eine Ablenkeinrichtung 9, beispielsweise einen Drehspiegel, als abgelenkter Strahl 8' in Richtung der Arbeitsebene 6 gelenkt. Diese Anordnung ist für ein Laser-Sinter-System mit einem CO2-Laser üblich. Eine Steuereinheit 40 ermöglicht die Steuerung des Trägers 4, der Aufbringungsvorrichtung 10 und der Ablenkeinrichtung 9. Die Elemente 1 bis 6, 10 und 11 sind innerhalb des Maschinenrahmens 100 angeordnet.

Bei der Herstellung des dreidimensionalen Objektes 3 wird das Pulvermaterial 11 schichtweise auf den Träger 4 bzw. eine zuvor verfestigte Schicht aufgetragen und mit dem Laserstrahl 8' an den dem Objekt entsprechenden Stellen einer jeden Pulverschicht verfestigt. Der Träger wird nach jeder selektiven Verfestigung einer Schicht um die Dicke der als nächstes aufzutragenden Pulverschicht abgesenkt.

Zum schichtweisen Aufschmelzen des erfindungsgemäßen Kunststoffpulvers werden passende Verfahrens- bzw. Systemparameter ausgewählt. Neben dem einzustellenden Anteil des NIR-absorbierenden Materials werden insbesondere die Schichtdicke, die Laserleistung und die Belichtungsgeschwindigkeit gezielt ausgewählt.

In einer bevorzugten Ausführungsform der Erfindung wird die elektromagnetische Strahlung spezifisch im NIR-Bereich innerhalb eines Fensters von nicht mehr als 50 nm (λ2 - λ1 < 50 nm), vorzugsweise nicht mehr als 40 nm, weiter bevorzugt nicht mehr als 30 nm und insbesondere nicht mehr als 20 nm emittiert. Dadurch ist es möglich, dass das erfindungsgemäße Kunststoffpulver weitere Stoffe umfassen kann, die aufgrund ihres Absorptions- oder Reflexionsvermögens in einem ersten Teilbereich des NIR-Bereichs stören würden. Durch Wahl eines relativ engen Wellenbereichs außerhalb des ersten Teilbereichs kann der störende Einfluss verringert oder verhindert werden.

In einer bevorzugten Ausführungsform der Erfindung emittiert die Strahlungsquelle elektromagnetische Strahlung spezifisch bei einer oder mehreren Wellenlängen im Bereich von 500-1500 nm, insbesondere bei einer oder mehreren Wellenlängen im Bereich 600 bis 1100 nm, und ganz besonders bevorzugt in einer oder mehreren der nachfolgenden Wellenlängen: 980±7 nm und/oder 940±7 nm und/oder 810 ±7 nm und/oder 640±7 und/oder 1064±7 nm. Bevorzugt emittiert die Strahlungsquelle bei 980±7 nm.

In einer bevorzugten Ausführungsform der Erfindung umfasst die Strahlungsquelle mindestens einen Laser, vorzugsweise eine oder mehrere Laserdioden. Die Laserdioden können dabei zellenförmig oder versetzt angeordnet sein. Ebenso ist es möglich, die Laserdioden in einem 2-dimensionalen Array anzuordnen. Es kann sich um einen Kantenemitter handeln. Vorzugsweise handelt es sich um einen Oberflächenemitter (VCSEL oder Philips-VCSEL). Durch eine Zeilenbelichtung lassen sich hohe Baugeschwindigkeiten erzielen. Zudem ermöglicht die Verwendung von Laserdioden einen hohen Wirkungsgrad und senkt die Energiekosten.

Geeignete Laserdioden arbeiten üblicherweise mit einer Leistung zwischen 0,1 und 500 Watt, bevorzugt mit mindestens 1,0 Watt und/oder höchstens 100 Watt. Der Fokus des Laserstrahls kann einen Radius zwischen 0,02 mm und 0,5 mm, bevorzugt von mindestens 0,04 mm und/oder höchstens 0,2 mm haben. Die Belichtungsgeschwindigkeit, d.h. die Geschwindigkeit des Laserfokus relativ zur Bauebene, beträgt üblicherweise zwischen 10 mm/s und 10000 mm/s, bevorzugt mindestens 100 mm/s und/oder höchstens 5000 mm/s.

Im Rahmen der vorliegenden Erfindung haben die Begriffe "umfassend" oder "enthaltend" sowie deren grammatikalischen Abwandlungen nachfolgende Bedeutungen: In einer Ausführungsform können neben den genannten Elementen weitere Elemente enthalten sein. In einer anderen Ausführungsform sind im Wesentlichen nur die genannten Elemente enthalten. Mit anderen Worten können die Begriffe neben ihrer herkömmlichen Bedeutung in einer besonderen Ausführungsform gleichbedeutend mit dem Begriff "im Wesentlichen bestehend aus" oder "bestehend aus" sein.

Die nachfolgenden Beispiele dienen zur Veranschaulichung und sind nicht als einschränkend zu verstehen. Sie definieren weitere bevorzugte Ausführungsformen der Erfindung.

### Beispiele

### Beispiel 1: Herstellung einer Dry-blendMischung aus Fabulase ^{®} 322 und PA12 Pulver

Für die Herstellung der Mischung wurde das PA12 Pulver (PA 2201 von EOS) mit Fabulase ^{®} 322 (Budenheim) in einen Container gefüllt und in einem _{"}Formiga Mischer" zu einer homogenen Mischung verarbeitet. Die Fabulase hatte eine Partikelgröße D50 von 0,6 µm. Die Fließfähigkeit und die Schüttdichte der so hergestellten Mischungen mit einem Fabulasegehalt von 0,5 bzw. 1.0 Gew.-% sind in der folgenden Tabelle 1 dargestellt:

**Tabelle 1:**

| Material | Fließfähigkeit [s]¹ | Schüttdichte [g/cm³]² |
|---|---|---|
| PA 2201 | 4,8 | 0,46 |
| PA 2201 mit 1% Fabulase | 4,7 | 0,46 |
| PA 2201 mit 0,5% Fabulase | 4,9 | 0,45 |

| | | |
|---|---|---|
| 1 bestimmt gemäß DIN EN ISO 6186:1998-08; 2 bestimmt gemäß DIN EN ISO 60:2000. | | |

Die so hergestellten Mischungen wurden mit einem EOSINT P360 3D-Drucker bei einer Bauraumtemperatur von 175 °C, einer Schichtdicke von 120 µm und einer Belichtungsgeschwindigkeit von 35 mm/s mit einer Wellenlänge von 980 nm belichtet. Für die Belichtung wurde eine Einheit von 16 in zwei Reihen positionierten InGaAs-Oberflächenemissionslasern mit vertikalem Resonator (VCSEL), verwendet, mit dem eine Fläche von 100 µm * 100 µm belichtet werden kann. Es ergibt sich damit ein Volumenenergieeintrag von 0,60 J/mm³.

Auf diese Weise wurden Teststäbchen gemäß DIN EN ISO 527-2 mit angepassten Abmessungen (Gesamtlänge I₃ 67 mm, Abstand zwischen zwei Enden I₂ = 50 mm, Gemessene Länge L0 = 20 mm, Start Abstand der Klammern = I₂ + 2mm, Dicke h = 1.6 bis 2 mm und Breite des schmalen Teils b₁ = 5.0 ±0.5 mm) hergestellt, die für die Bestimmung von Zugfestigkeit σₘ, Zugmodul *Eₜ* und Bruchdehnung ε_{R} verwendet wurden. Die Ergebnisse dieser Bestimmung sind für die Proben mit 1 Gew.-% Fabulase in der folgenden Tabelle 2 angegeben:

| | Dicke des Teststäbchen | Zugmodul¹ | Zugfestigkeit¹ | Bruchdehnung¹ |
|---|---|---|---|---|
| | mm | MPa | MPa | % |
| 1.0 % Fabulase | 1,63 | 1269,86 | 28,44 | 2,97 |

| | | | | |
|---|---|---|---|---|
| 1 = bestimmt gemäß DIN EN ISO 527-2:2012 | | | | |

Die Teststäbchen hatten im Fall eines Anteils von Fabulase von 0,5 Gew.-% einen sehr leicht bräunlichen und im Fall der eines Anteils von Fabulase von 1 Gew.-% einen leicht bräunlichen Farbton. In beiden Fällen war der Farbton deutlich heller als bei einem vergleichbaren mit Ruß hergestellten Teststäbchen. Die Ergebnisse zeigen, dass mit dem Fabulase-Absorber helle Bauteile mit guten Zugeigenschaften hergestellt werden konnten.

### Beispiel 2

In ein PA12-Pulver mit einem TiO₂ Anteil von 2,5 Gew.-% wurden Anteile von 0,125 Gew.-% bzw. 0,5 Gew.-% LaB₆ mit einer Primärpartikelgröße von < 100 nm und einer Aggregatpartikelgröße von < 500 nm eingemischt. Zusätzlich wurden 0,05 Gew.-% Rieselhilfe zugesetzt. Die so hergestellten Pulvermischungen wurden auf einem Versuchssystem mit einem Laserdiodenarray bei einem Volumenenergieeintrag von 0,35-0,4 J/mm³ zu zweidimensionalen Plättchen (1 Schicht belichtet) verarbeitet. In beiden Fällen konnten gut verschmolzene Bauteile erzeugt werden. Mikroskopieaufnahmen der beiden Bauteile zeigen im Fall des Pulvers mit 0,5 Gew.-% des Absorbers eine homogene, gleichmäßig verschmolzene Schicht, während die Bauteile, die mit dem Pulver mit 0,125 Gew.-% des Absorbers gebaut wurden, einzelne nicht vollständig aufgeschmolzene Partikel zeigen.

### Beispiel 3

Zur Herstellung des erfindungsgemäßen Pulvers wurde PA12 (Vestamid L1700, Fa. Evonik) mit 0,75 Gew.-% des Absorbers Iriotec 8850 (Fa. Merck, Primärpartikelgröße < 1 µm) mittels eines Zweischnecken-Extruders compoundiert und mit PEG 20.000 in einem Verhältnis von 40:60 bei 230-250°C coextrudiert. Das Extrudat wurde in kaltem Wasser aufgefangen und die Lösung später mit heißem Wasser (>60°C) verdünnt und die Polymerpartikel mittels einer Zentrifuge abgetrennt und gewaschen. Das getrocknete Pulver wurde für eine bessere Verarbeitbarkeit mit 0,1% eines Rieselhilfsmittels versetzt. Analog wurde ein Vergleichsmaterial mit 0,75 Gew.-% des Absorbers Iriotec 8820 (Fa. Merck, Primärpartikelgröße < 15 µm) hergestellt.

Die Helligkeit (CIELab Farbmodell) des entstandenen Pulvers wurde mit 87 bestimmt. Die Absorption einer Pulverschüttung mit ca. 2 mm Dicke bei 980 nm liegt bei 25%. Für das Vergleichsmaterial wurde eine Helligkeit von 88 und eine Absorption bei 980 nm von 22% bestimmt. Die Absorption wurde mittels eines NIR Handscanners ("SolidScanner" der gleichnamigen Firma) durch Messung an einer ca. 2 mm hohen Pulverschüttung in einem zylindrischen Glas bestimmt.

Für Prozesstests wurden die Materialien auf einem EOS P500 LPF System bei einer Prozesskammertemperatur von 165°C bzw. 163°C (für das Vergleichsmaterial), einer Entnahmekammertemperatur von 140°C und einer Bauplattformtemperatur von 165°C zu Plättchen mit ca. 5 Schichten (0,1 mm Schichtdicke) mit einem Volumenenergieeintrag von 0,33 J/mm³ verbaut. Die resultierenden Plättchen aus dem erfindungsgemäßen Kunststoffpulvers mit dem Absorber Iriotec 8850 sind homogen und gut verschmolzen. Mikroskopische Aufnahmen des Querschnitts zeigten ein porenfreies Bauteil ohne einzeln erkennbare Partikel im Volumen.

Das aus dem Vergleichsmaterial hergestellte Bauteil war demgegenüber signifikant schlechter verschmolzen. In der Mikroskopieaufnahme waren im kompletten Querschnitt einzelne, schlecht miteinander verschmolzene Partikel zu erkennen. Aufgrund der geringeren Verschmelzung ist für das Vergleichsbauteil von deutlich gegenüber dem erfindungsgemäßen Beispiel abfallenden mechanischen Eigenschaften auszugehen.

### Beispiel 4:

PEKK (Kepstan 6002, Fa. Arkema) wurde mittels Vermahlung zu einem Pulver zerkleinert und der Grobanteil wurde durch Siebung mit einem Sieb mit einer Maschenweite von 125 µm abgetrennt. Das so generierte Feinpulver wurde in einem schnelllaufenden Mischer (Fa. Mixaco) unter hoher Scherung mit einem Anteil von 3 Gew.-% Iriotec 8850 (Fa. Merck, Primärpartikelgröße < 1 µm) gemischt, wobei sich die Mischung während des Vorgangs auf bis zu 150 °C erwärmt, anschließend wurde für weitere 20 min eine Temperatur von 145 - 150°C gehalten.

Das so hergestellte Pulver wurde auf einem EOS P500 LPF System bei einer Prozesskammertemperatur von 180°C sowie einer Entnahme- und Bauplattformtemperatur von 160°C verarbeitet. In einem Bereich von Volumenenergieeinträgen von 0,47 J/mm³ bis 1,0 J/mm³ konnten stabile und gut verschmolzene Plättchen erzielt werden.

Die Absorption des Pulvers in Form einer Schicht mit einer Dicke von ca. 2 mm bei einer Wellenlänge von 980 nm liegt bei 29 %, die Helligkeit nach dem CIELab Modell bei L = 85.

## Patentansprüche

1. Kunststoffpulver zur Verwendung als Aufbaumittel zur additiven Herstellung eines dreidimensionalen Objekts durch Einwirken einer NIR-Strahlung, wobei das Kunststoffpulver Partikel eines hellen NIR-Strahlung absorbierenden Materials mit einer mittleren Partikelgröße D50, wie bestimmt mittels Laserbeugung, von ≤ 10 µm in einer Menge enthält, dass eine als Pulverschüttung aus dem Kunststoffpulver gebildete Schicht einer Dicke von 2 mm einen Absorptionsgrad, bestimmt bei einer Wellenlänge von 980±7 nm, im Bereich von 20 bis 90 % aufweist .

2. Kunststoffpulver nach Anspruch 1, wobei die Menge des NIR-Strahlung absorbierenden Materials so eingestellt ist, dass eine kompakte aus dem Kunststoffpulver gebildete Schicht einer Dicke von 2 mm einen Absorptionsgrad von mindestens 20 und/oder höchstens 50%, und bevorzugt von mindestens 25 und/oder höchstens 30% aufweist.

3. Kunststoffpulver nach Anspruch 1 oder 2, wobei der Gewichtsanteil des NIR-Absorbers bezogen auf das Gesamtgewicht des Kunststoffpulvers mindestens 0,05 und/oder höchstens 5,0 Gew.-%, bevorzugt mindestens 0,08 und/oder höchstens 2,0 Gew.-% und weiter bevorzugt mindestens 0,1und/oder höchstens 1,2 Gew.-% beträgt.

4. Kunststoffpulver nach einem der Ansprüche 1 bis 3, wobei die Partikel des hellen NIR-Strahlung absorbierenden Materials eine Partikelgröße von weniger als 5 µm, bevorzugt weniger als 2 µm und besonders bevorzugt von weniger als 1 µm und/oder mindestens 20 nm aufweisen.

5. Kunststoffpulver nach mindestens einem der vorangehenden Ansprüche, wobei das helle NIR-Strahlung absorbierende Materials ein anorganisches Pigment ist und/oder wobei die Partikel eine Helligkeit bestimmt gemäß dem Cielab L*a*b Farbmodell, wie spektralphotometrisch gemessen, von 25 oder mehr und bevorzugt von 50 oder mehr aufweist.

6. Kunststoffpulver nach mindestens einem der vorangehenden Ansprüche, wobei das Kunststoffpulver eine Rieselfähigkeit bestimmt gemäß DIN EN ISO 725-9 aufweist, die um nicht mehr als 20%, vorzugsweise nicht mehr als 10% und besonders bevorzugt nicht mehr als 5% von der Rieselfähigkeit des Kunststoffpulvers ohne die Partikel eines hellen NIR-Strahlung absorbierenden Materials abweicht.

7. Kunststoffpulver nach mindestens einem der vorhergehenden Ansprüche, wobei das Kunststoffpulver eine Trockenpulvermischung umfassend Kunststoffpartikel und Partikel des hellen NIR-Strahlung absorbierenden Materials ist, und/oder wobei das Kunststoffpulver Kunststoffpartikel mit auf ihrer Oberfläche adsorbierten Partikeln des hellen NIR-Strahlung absorbierenden Materials enthält, und/oder wobei Partikel des hellen NIR-Strahlung absorbierenden Materials als in größere Kunststoffpartikel inkorporierte Partikel enthalten sind.

8. Kunststoffpulver nach mindestens einem der vorangehenden Ansprüche, wobei das Kunststoffpulver zusätzlich Reflexionspartikel mit die NIR-Strahlung zumindest teilweise reflektierender Oberfläche umfasst, wobei die Reflexionspartikel bevorzugt TiO₂ umfassen, und wobei der Gewichtsanteil der Reflexionspartikel 0,1 bis 15 %, bevorzugt mindestens 0,3 und/oder höchstens 5 %, bezogen auf das Gesamtgewicht des Pulvers ausmacht.

9. Kunststoffpulver nach mindestens einem der vorangehenden Ansprüche, wobei das Kunststoffpulver als Kunststoff ein Polymer umfasst, dass ausgewählt ist aus zumindest einem Polyaryletherketon (PAEK), insbesondere in Form von Polyetherketonketon (PEKK), Polyarylethersulfon (PAES), Polyetherimid (PEI), Polypropylen, Polyamid, Polyester, Polyether, Polylactid, Polyolefin, Polystyrol, Polyphenylensulfid, Polyvinylidenfluoride, Polyphenylenoxid, Polyimid, insbesondere in Form von Polyetherimid, Polycarbonat, bevorzugt aus Polyamid, weiter bevorzugt aus Polyamid 12, Polyamid 11 und/oder Polyamid 1012 und/oder zumindest einem Copolymer, das mindestens eines der vorangehenden Polymere bzw. deren Monomereinheiten einschließt, und/oder zumindest einem Polymerblend, das zumindest eines der genannten Polymere oder Copolymere einschließt, und wobei das Kunststoffpulver bevorzugt aus einem dieser Polymere als Kunststoff besteht.

10. Verfahren zur Herstellung eines Kunststoffpulvers nach einem der Ansprüche 1 bis 9, wobei das Verfahren die Schritte
(i) Bereitstellen von Kunststoffpartikeln und Partikeln des NIR-Strahlung absorbierenden Materials, und
(ii) Vermischen der Kunststoffpartikel und der Partikel des NIR-Strahlung absorbierenden Materials oder Aufbringen der Partikel des NIR-Strahlung absorbierenden Materials auf die Kunststoffpartikel oder Inkorporieren der Partikel des NIR-Strahlung absorbierenden Materials in die Kunststoffpartikel
umfasst.

11. Verfahren zur Herstellung eines dreidimensionalen Objekts durch selektives Verfestigen eines pulverförmigen Aufbaumaterials an den dem Querschnitt des dreidimensionalen Objekts in der jeweiligen Schicht entsprechenden Stellen durch Einwirkung von Strahlung, vorzugsweise von NIR-Strahlung, wobei als Aufbaumaterial ein Kunststoffpulver nach einem der Ansprüche 1 bis 9 verwendet wird und wobei das Aufbaumaterial durch Einwirkung von elektromagnetischer Strahlung, die durch eine Strahlungsquelle emittiert wird, selektiv verfestigt wird.

12. Verfahren nach Anspruch 11, wobei eine Energiemenge im Bereich von 0,02 J/mm³ bis 2,5 J/mm³, vorzugsweise mindestens 0,05 J/mm³ und/oder höchstens 1,0 J/mm³ auf eine Stelle im Querschnitt des dreidimensionalen Objekts aufgebracht wird, um diese Stelle zu verfestigen.

13. Verfahren nach Anspruch 11 oder 12, wobei das Kunststoffpulver vor dem Verfestigen auf eine Temperatur von höchstens 15°C, bevorzugt höchstens 10°C und weiter bevorzugt höchstens 5°C unterhalb der Schmelztemperatur des Kunststoffpulvers erhitzt wird.

14. Dreidimensionales Objekt, herstellbar oder hergestellt nach dem Verfahren gemäß mindestens einem der Ansprüche 11 bis 13 oder durch selektives Verfestigen eines pulverförmigen Aufbaumaterials an den dem Querschnitt des dreidimensionalen Objekts in der jeweiligen Schicht entsprechenden Stellen durch Einwirkung von Strahlung, insbesondere durch Einwirkung von NIR-Strahlung, wobei als Aufbaumaterial ein Kunststoffpulver nach einem der vorhergehenden Ansprüche 1 bis 9 verwendet wurde.

15. System zur Herstellung von dreidimensionalen Objekten durch selektives Verfestigen eines pulverförmigen Aufbaumaterials an den dem Querschnitt des dreidimensionalen Objekts in der jeweiligen Schicht entsprechenden Stellen durch Einwirkung von Strahlung, bevorzugt von NIR-Strahlung, wobei das System mindestens eine Strahlungsquelle, die ausgebildet ist, um elektromagnetische Strahlung spezifisch in einer im NIR gelegenen Wellenlänge oder Wellenlängenbereich zu emittieren, eine Prozesskammer, die als offener Behälter mit einer Behälterwandung ausgeführt ist, einen in der Prozesskammer befindlichen Träger, wobei Prozesskammer und Träger gegeneinander in vertikaler Richtung beweglich sind, einen Vorratsbehälter und einen in horizontaler Richtung bewegbaren Beschichter aufweist, wobei der Vorratsbehälter zumindest teilweise mit einem Kunststoffpulver nach einem der Ansprüche 1 bis 9 als Aufbaumaterial gefüllt ist.

16. Verfahren nach einem der Ansprüche 11 bis 13 oder System nach Anspruch 15, wobei die elektromagnetische Strahlung spezifisch im NIR-Bereich innerhalb eines Fensters von höchstens 50 nm, vorzugsweise höchstens 40 nm, weiter bevorzugt höchstens 30 nm und insbesondere höchstens 20 nm emittiert wird, wobei vorzugsweise die Strahlungsquelle elektromagnetische Strahlung im Bereich von 500 nm bis 1500 nm, insbesondere bei mindestens einer der Wellenlängen 980±7 nm und/oder 940±7 nm und/oder 810 ±7 nm und/oder 64047 nm und/oder 1064±7 nm emittiert.

17. Verfahren oder System nach 16, wobei die Strahlungsquelle mindestens einen Laser, vorzugsweise mindestens einen Diodenlaser umfasst.
